(19) Europäisches Patentamt
European Patent Office
Office européen des brevets

(11) **EP 3 929 665 A1**

(12) **EUROPEAN PATENT APPLICATION**

(43) Date of publication:
**29.12.2021 Bulletin 2021/52**

(51) Int Cl.:
***G03H 1/08*** (2006.01)

(21) Application number: **20181447.2**

(22) Date of filing: **22.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Imec VZW**
**3001 Leuven (BE)**

• **Vrije Universiteit Brussel**
**1050 Brussel (BE)**

(72) Inventors:
• **BLINDER, David**
**3001 Leuven (BE)**
• **SCHELKENS, Peter**
**3001 Leuven (BE)**

(74) Representative: **IP HILLS NV**
**Hubert Frère-Orbanlaan 329**
**9000 Gent (BE)**

(54) **A METHOD FOR COMPUTING A HOLOGRAPHIC INTERFERENCE PATTERN**

(57) The present disclosure relates to a method for computing a holographic interference pattern for a holographic plane (200) comprising pixels ($200_M$) of an illuminated three-dimensional, 3D, scene comprising object points ($100_N$) representing one or more 3D objects (10,20,30), the method comprising: determining, for a respective object point, a total light component contributed by the one or more light sources in the 3D scene; and calculating, for a respective pixel, a complex-valued amplitude based on the total light component of non-occluded object points within a viewing cone of the pixel, thereby deriving the holographic interference pattern. The present disclosure further relates to a computer program product implementing the method, a computer-readable storage medium comprising the computer program product and a data processing system for carrying out the method.

FIG.3

EP 3 929 665 A1

Defining pixels in the holographic plane — 301

Defining object points in the 3D scene — 302

300

*Calculating, for respective object point, angle dependent component based on tracing direct rays* — 311

310

Calculating , for respective object point, angle dependent component based on tracing indirect rays — 312

Calculating , for respective object point, angle independent component based on tracing direct rays — 321

320

Calculating, for respective object point, angle independent component based on tracing indirect rays — 322

Calculating, for a respective pixel, complex valued amplitude based on a total light component of non-occluded object points within a viewing cone of the pixel — 350

FIG.4

## Description

### Technical Field

Various example embodiments relate to a method for computing a holographic interference pattern. Further embodiments relate to a computer program product implementing the method, a computer readable storage medium comprising the computer program product and a data processing system for carrying out the method.

### Background

A holographic image can be generated, for example, by digitally computing a holographic interference pattern and printing it onto a mask or film for subsequent illumination by a suitable coherent light source. The method of digitally generating the holographic interference patterns is referred to as Computer-Generated Holography, CGH. Computer-generated holograms have the advantage that the objects which one wants to show do not have to possess any physical reality at all which makes the computer-generated holography applicable to a wide range of applications such as computer-aided design, gaming, holographic video, etc. Generating the holographic interference pattern or holographic content by means of CGH however, requires significant computing time. The problem becomes even more critical when creating a photo-realistic holographic content accounting for three-dimensional, 3D, visual cues such as occlusion, shadows, continuous parallax, and precise focal cues. This makes CGH impractical for most use cases.

### Summary

Amongst others, it is an object of embodiments of the present disclosure to provide a method for generating photo-realistic CGH content accounting for 3D visual cues. A further object of embodiments of the present disclosure is to provide a method for generating photo-realistic holographic content within an acceptable computing time.

The scope of protection sought for various embodiments of the invention is set out by the independent claims. The embodiments and features described in this specification that do not fall within the scope of the independent claims, if any, are to be interpreted as examples useful for understanding various embodiments of the invention.

This object is achieved, according to a first example aspect of the present disclosure, by a method for computing a holographic interference pattern for a holographic plane comprising pixels of an illuminated three-dimensional, 3D, scene comprising object points representing one or more 3D objects, the method comprising:

- determining, for a respective object point, a total light component contributed by the one or more light sources in the 3D scene;

- calculating, for a respective pixel, a complex-valued amplitude based on the total light component of non-occluded object points within a viewing cone of the pixel, thereby deriving the holographic interference pattern.

In other words, the method computes the holographic interference pattern in two stages. At the first stage, the total light component contributed by the one or more light sources in the 3D scene is determined for every object point within the 3D scene, and, at the second stage, the holographic interference pattern is derived by calculating the complex-valued amplitude from all non-occluded object points for every pixel in the holographic plane.

Computing the holographic interference pattern in two stages allows accounting for the different 3D visual cues during the first stage, i.e. during the computation of the total light component for each object point, and then to determine the complex-valued amplitude at the respective pixels during the second stage. By doing so, a total light component accounting for the angle-dependent and angle-independent light contributions is obtained. This allows achieving realistic lighting effects and therefore obtain a photo-realistic holographic image. The two-stage approach ensures that the same total light component in a holographic point is used for calculating the complex-valued amplitude, enforcing among other things coherent optical distance and phase across pixels. Furthermore, the two phases avoid the redundancy of evaluating rays for all pair combinations of object points and holographic pixels, which would become computationally intractable.

According to example embodiments, the determining comprises calculating an angle-dependent light component based on tracing direct rays from the object point towards one or more light sources in the 3D scene.

According to example embodiments, the calculation of the angle-dependent light component is further based on tracing indirect rays from the object point towards the one or more light sources in the 3D scene.

The calculation of the angle-dependent light component is performed based on backward raytracing. That is, rays are traced from the respective object points towards the one or more light sources. Further, the backward raytracing is performed by tracing direct rays and/or indirect rays. By tracing direct rays, it is possible to account for lighting effects such as specular lighting and shininess of the objects within the 3D scene, while by tracing indirect rays global illumination effects can be modelled.

According to example embodiments, the tracing is performed within an acceptance cone with a point of origin at the object point and oriented towards the 3D scene.

The acceptance cone oriented towards the 3D scene defines the part of the 3D scene seen from the respective object point that can meaningfully contribute to the angle-dependent light component of the object point. The orientation and opening angle of the acceptance cone depend among other things on the surface normal and material properties. By considering rays for the angle-dependent component within the acceptance cone, the computation time for the angle-dependent light component calculation is reduced.

According to example embodiments, the acceptance cone has a normal coinciding with a normal of a reflected copy of a viewing cone with a point of origin at the object point and oriented towards the holographic plane.

The viewing cone oriented towards the holographic plane defines the area of the holographic plane potentially affected by object point. The angle of the viewing cone is determined e.g. by the hologram pixel pitch, bounding the maximum viewing angle and thereby the angles from which the point could be observed. By coinciding the acceptance cone oriented towards the 3D scene with the reflected copy of the viewing cone oriented towards the holographic plane, it is assured that the rays reflected at the respective object point and falling within the area of the holographic plane seen from the object point are the are taken into account when calculating the angle-dependent light component for the respective object point. This allows for lowering the computation complexity while preserving the visual quality of the holographic image.

Further, by dimensioning the respective viewing cones such that the area of the 3D scene seen from the object point is the same as the visible area of the holographic plane, it is assured that only rays falling within the visible area of the holographic plane are taken into account. This further reduces the computation time of the angle-dependent light component.

According to example embodiments, the size of the viewing cone is defined based on the size of the viewing cone of the pixel.

According to example embodiments, the viewing cone of the pixel is defined by the hologram wavelength and the spacing of the pixels in the holographic plane.

The viewing cone of the pixel defines the part of the 3D scene seen from a respective pixel. By dimensioning the size of the viewing cone based on the viewing cone of the pixel, it's assured that the light components are calculated only for object points seen from the respective pixel. This allows, to further reduce the computation time for the calculation of the angle-dependent light component while preserving the visual quality in the holographic image.

According to example embodiments, the determining further comprises calculating an angle-independent light component based on tracing direct rays from the object point towards one or more light sources in the 3D scene.

According to example embodiments, the calculation of the angle-independent light component is further based on tracing indirect rays from the object point towards one or more light sources in the 3D scene.

In other words, the calculation of the angle-independent light component is performed based on backward raytracing. The backward raytracing is performed by tracing direct rays and/or indirect rays to account for various lighting effects. By tracing direct rays, it is possible to account for lighting effects due to diffuse lighting within the 3D scene, while by tracing indirect rays, for lighting effects from global illumination.

According to example embodiments, the one or more light sources comprises at least one area light source and/or at least one volumetric light source.

By illuminating the 3D scene with an area and a volumetric light source, the photo-realistic holographic image may be obtained.

According to example embodiments, the object points are distributed over the surfaces of the one or more 3D objects and the number of the object points representing a respective surface is proportional to the area of the surface.

According to a second example aspect, a computer program product is disclosed comprising computer-executable instructions for performing the method according to the first example aspect when the program is run on a computer.

According to a third example aspect, a computer-readable storage medium is disclosed comprising a computer program product according to the second example aspect.

According to a fourth example aspect, a data processing system is disclosed for carrying out the method according to the second example aspect.

The various example embodiments of the first example aspect may be applied as example embodiments to the second, third, and fourth example aspects.

**Brief Description of the Drawings**

Some example embodiments will now be described with reference to the accompanying drawings.

FIG.1 shows an example embodiment of tracing direct light rays at a first calculation phase according to the present disclosure;

FIG.2 shows an example embodiment of the tracing indirect light rays at a first calculation phase according to the present disclosure;

FIG.3 shows an example embodiment of the tracing rays at first and second calculation phases according to the present disclosure;

FIG.4 shows steps according to an example embodiment of the present disclosure for computing a holographic interference pattern; and

FIG.5 shows an example embodiment of a suitable computing system for performing one or several steps in embodiments of the present disclosure.

## Detailed Description of Embodiment(s)

The present disclosure relates to a method for generating a photo-realistic Computer-Generated Holography, CGH, content. Computer-Generated Holography, CGH, is the method of digitally computing a holographic image, i.e. a holographic interference pattern, and printing it onto a mask or film for subsequent illumination by a suitable coherent light source. The holographic image can then be brought to life by for example a holographic 3D display, a display that operates on the basis of interference of coherent light.

The holographic interference pattern may be derived based on the point source concept, according to which the objects within the scene are broken down in self-luminous object points. An elementary hologram is then calculated for every self-luminous object point and the final hologram is derived by superimposing all the elementary holograms. Point-source computer-generated holograms or point-source based holographic interference patterns may be derived by employing the Ray tracing method. Ray tracing essentially treats each object point as an individual light source or as a reflecting element illuminated by the lights beams or rays. Depending on the type of light sources illuminating the scene and the properties of the objects, different light components such as angle-dependent and an angle-independent light component are observed at the respective object points. The total light component at a respective object point is thus a sum of the angle-dependent and angle-independent light components. The angle-dependent light component comprises the light component contributed by specular lighting while angle-independent light component comprises light components contributed by diffuse and/or ambient lighting.

Specular lighting creates bright spots on objects based on the intensity of the specular lighting and the specular reflection constant of the object surface. The specular reflection light component thus consists of light reflected in a range of directions whose centre direction coincides with the reflected light. The specular reflection light component gives objects shine and highlights.

Diffuse lighting is the direct illumination of an object by an even amount of light interacting with its surface. After light strikes an object, it is reflected as a function of the surface properties of the object as well as the angle of the incoming light. The diffuse reflection light component thus consists of light scattered in all directions with a light intensity defined by the angle of incidence of the light. The diffuse reflection light component is the primary contributor to the object's brightness and forms the basis for its colour.

Ambient light is directionless, it interacts uniformly across all objects' surfaces, with an intensity determined by the strength of the ambient light sources and the properties of objects' surface, i.e. its materials. The ambient reflection light component consists of the sum of the light reflections from surrounding objects in the scene. Because the ambient light consists of rays traveling in various directions, its reflection is independent of the direction.

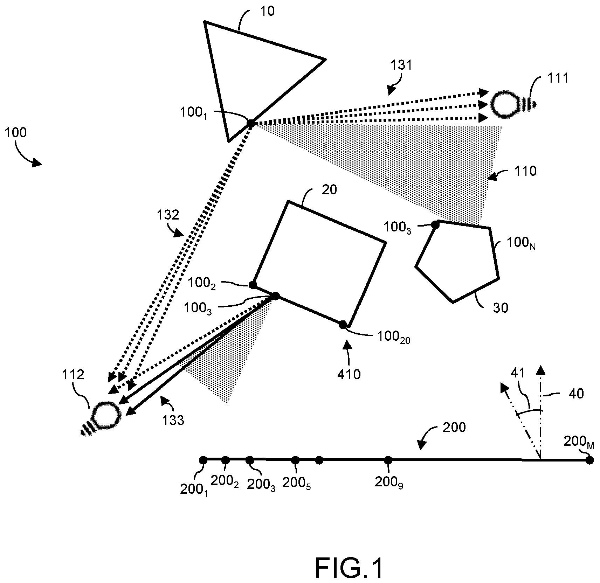

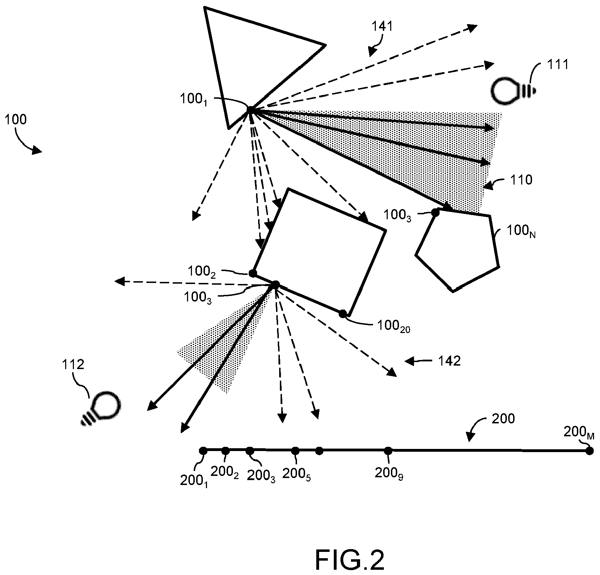

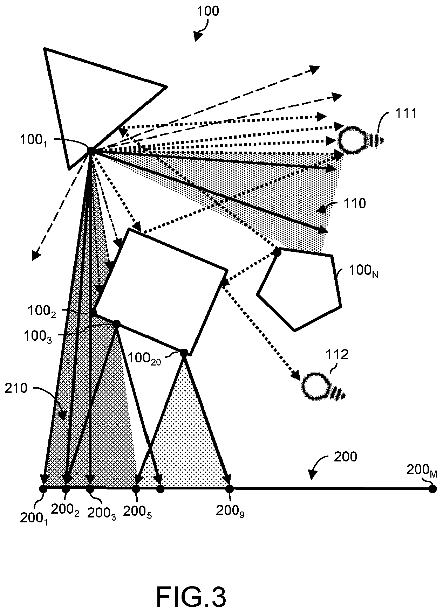

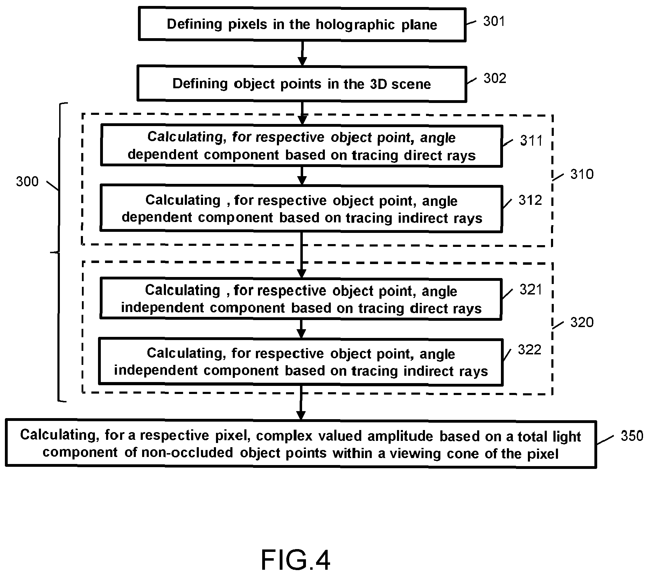

The method for computing the holographic interference pattern according to the present disclosure is based on the point-source concept in which the total light component is derived based on raytracing. The method will be now described with reference to the FIG.1 to FIG.4. FIG.1 shows an example embodiment of tracing direct light rays at a first calculation phase according to the present disclosure, FIG.2 shows an example embodiment of tracing indirect light rays at a first calculation phase according to the present disclosure, FIG.3 shows an example embodiment of the tracing rays at first and second calculation phases according to the present disclosure, and FIG.4 shows steps according to an example embodiment of the present disclosure for computing the holographic interference pattern. The parts which are identical in the figures are denoted by identical reference signs.

FIG.1 shows a schematic presentation of a simple 3D scene 100 comprising three 3D objects, a pyramid 10, a cube 20, and a hexagonal prism 30. The 3D scene is illuminated by light sources 111 and 112. The light sources may be a point light source, a spotlight light source, an area and/or a sunlight source or any combination of them. A point light source is a light source located within the 3D scene at a specific location which shines light equally in all directions such as a table lamp. A spotlight light source is a focused light that has a cone-shaped envelop as it projects out from the light source, such as a spotlight in a theatre. A sunlight source is a light source located outside the 3D scene and far enough away that light rays emitted from the light source are basically from the same direction, e.g. the sun in an outdoor scene. Sunlight source is also commonly referred to as a volumetric light source. An area light source is a light source with a rectangular area emitting light from one side of the rectangle. An example of an area light source is a fluorescent light fixture in a ceiling panel. In this example, the light sources 111 and 112 are area light sources.

The computation of the hologram image is based on the laws of diffraction given by the Huygens-Fresnel principle which expresses how to calculate the complex-valued amplitude of any point $p$ on a holographic plane $H$, given a collection of surfaces $S$, integrating $\forall x \in S$. Herein, a generalization of the Huygens-Fresnel principle is applied, defined as

$$H(p) = \iint_S A(x,p) exp(ik\|p - x\|)\, n \cdot \langle p - x \rangle\, dx \qquad (1)$$

where $\boldsymbol{n}$ is the surface normal of $S$ at object point $x$; $k = \dfrac{2p}{\lambda}$ is the wavenumber with $\lambda$ being the wavelength of the light and $i$ the imaginary unit, and, where $\|\cdot\|$ is the Euclidean norm and $\langle \cdot \rangle$ is the normalization operator so that

$$\langle a \rangle = \begin{cases} \dfrac{a}{\|a\|}, & \text{if } a \neq 0 \\ 0, & \text{if } a = 0 \end{cases}. \qquad (2)$$

To numerically evaluate this integral, the expression in Equation (1) is discretized. To do so, the objects within the 3D scene, i.e. the original image, and the holographic plane are respectively subdivided, i.e. quantized, into points and pixels.

For this purpose, in a first step 301 of the method, the holographic plane 200 is sampled on a regular grid to obtain pixels $p$, equispaced by a distance $p$ called the pixel pitch, representing the hologram pixels. In a second step 302, object points x representing the objects in the 3D scene are defined by sampling the surfaces $S$ of the objects 10, 20, and 30. A discrete set of object points $\overline{S}$ containing $\#\overline{S} = N$ object points $100_1$, $100_2$, ... , $1000_N$ is obtained. The sampling of the objects' surfaces may be done in a random or a quasi-random fashion. For example, the Monte Carlo method may be used. The quasi-random Monte-Carlo sampling method achieves a more equidistributed object points in comparison to the pseudo-random sampling method. To achieve a more realistic object's representation, the sampling may take into account the area of the object's surface, its orientation, its distance to the hologram plane and/or its material properties. For example, the bigger the object's surface the higher the number of object points representing the surface. Further, the sampling may take into account the characteristic of the object's surface. In other words, depending on the viewing angle a flat, concave, or convex surface may be represented by a different number of object points. For example, to achieve a realistic representation of an edge when looking at it from above, more points distributed along and in close proximity to the edge are required in comparison to when looking at the same edge from another angle.

After quantization of the objects and the holographic plane, the method proceeds to the computation of the holographic image or a holographic interference pattern. The goal is to compute the Point Spread Function, PSF, modulation function A which, may be defined as

$$A(x,p) = B(x,p) \cdot \Phi(x) \qquad (3)$$

, where $\Phi : \mathbb{R} \to \mathbb{T}$ is a random phase function so that $\Phi(x) = \exp(i\varphi(x))$ and $\varphi(x) \in$

$$\mathcal{U}(0, 2\pi),$$

i.e. the uniform distribution between 0 and $2\pi$. Here, $B : \mathbb{R}^2 \to \mathbb{R}$ will define the amount of light emitted from an object point x to a pixel $p$ in the holographic plane, which is equivalent to the Bidirectional Reflectance Distribution Function, BRDF, definition. Note, that, $B : \mathbb{R}^2 \to \mathbb{C}$ and more complex phase distributions for $\Phi$ can be chosen to model even more kinds of light interactions and phenomena.

Conventionally, the BRDF function $B$ for all pairs of points $\{x,p\}$ is directly computed. According to the present disclosure, however, the calculation of the BRDF function and therefore the calculation of the holographic image is performed in two phases. In the first phase, for a respective object point, the total light component contributed by the light sources in the scene is computed, and in the second phase, the complex-valued amplitude, for a respective holographic pixel, based on the total light component is computed.

In other words, in the first phase, i.e. step 300, a simplified representation of $B$ is computed for every object point $x \in \overline{S}$ to derive the total light component for a respective object point, and, in the second phase, i.e. step 350, the point spread functions $A(x,p)$ for the respective object points are modulated by the ray-traced BRDF $B(x,p)$ to derive the complex-valued amplitude of the respective holographic pixels.

By performing the computation in two phases, complex effects, such as occlusions and aliasing considerations may be taken into account. For example, this can be achieved by setting the value of the BRDF function for a pair of a holographic pixel and an object point to zero, e.g. $B(x_0,p_0) = 0$ for the pair $x_0,p_0$, whose associated rays are occluded or for $p_0$ that lie outside of the viewing cone originating from $x_0$.

To calculate the total light component in step 300, the respective object points x are characterized by a material. The material may be described by a number of parameters according to a material characterization model. An example material characterization model is the Phong model according to which a respective object point is characterized by a diffuse reflection constant $K_d(x)$, a specular reflection constant $K_s(x)$, an ambient reflection constant $K_a(x)$ and a shichiness constant $\alpha(x)$. In other words, according to the Phong model, a respective object point is represented by the total light component being the sum of the diffuse, the specular, and the ambient light components.

According to an example embodiment, instead of employing a classic Phong model, a modified Phong is employed according to which the ambient light component is replaced by global illumination. Global illumination models how light bounces off of surfaces onto other surfaces, i.e. the indirect light illumination, rather than being limited to just the light that hits a surface directly from a light source, i.e. the direct light illumination.

To account for occlusion culling, only objects' surfaces with normals n who satisfy the condition

$$ u \cdot n < sin(\theta_{max}) = \lambda v_{max} = \frac{\lambda}{2\rho} \qquad (4) $$

are taken into consideration for sampling the object surface points. $\boldsymbol{u}$ is the hologram normal 40 pointing to the scene 100, and $\theta_{max}$ is the maximum diffraction angle 41 determined by the Nyquist rate $v_{max}$ which depends on the pixel pitch $p$. In other words, surfaces not visible from the holographic plane are not taken into account.

Next, the angle-dependent and angle-independent light components for the respective object points are derived. This is performed in method steps 310 and 320 which may be performed sequentially or in parallel. The two light components are computed for the respective object pixels by taking into account both direct and indirect rays as follows.

For a respective object point, two sets of light rays, i.e. one set of direct rays and another set of indirect rays, are traced to obtain the BRDF B for that object point. In this example, a strict definition for direct and indirect lighting is employed according to which direct illumination is the light going straight from the light source to the respective object points, while the light from the rest of the scene is considered indirect. Indirect lighting will thus also include light rays reflected once from another object surface in the scene.

The first set of rays, i.e. the set of direct rays, is traced from the respective object point towards the one or more light sources. For the area light sources 111 and 112, multiple light ray samples are taken per object point. This can be done by subdividing the light source area into equal segments and tracing one ray to a random position within each segment. As shown in the example of FIG.1, the object point $100_1$ is directly illuminated by the two light sources 111 and 112, while object point $100_3$ is directly illuminated by light source 112 only. According to the employed direct lighting definition, directly illuminated means that there is a line-of-sight, i.e. a straight path, between the object point and the light source. To derive the light component contributed by the direct rays for object point $100_1$, one set of direct rays 131 is traced from the object point $100_1$ towards the light source 111 and another set of direct rays 132 towards the light source 112. To derive the light component contributed by the direct rays for object point $100_3$, one set of direct rays 133 is traced towards the light source 112. In this figure, only 3 rays have been illustrated for simplicity reasons. In practice, the number of direct rays traced towards the respective light sources may be selected in accordance with the scene complexity and the desired quality of the holographic image. The light component contributed by the direct rays comprises both diffuse reflection light component as well as the specular reflection light components.

The second set of rays, i.e. the set of indirect rays, will uniformly and randomly sample the hemisphere on the object surface $S$ to obtain information on the global illumination. As shown in the example of FIG.2, to derive the global illumination light component for the object point $100_1$, a set of ten rays 141 is traced, while to derive the global illumination light component for object point $100_3$, a set of six rays 142 is traced. Similarly to above, the number of indirect rays traced may be selected in accordance with the scene complexity and the desired quality of the holographic image.

The set of all traced direct and indirect light rays per object point x may be denoted as $L(x)$. Further, $L(x)$ may be defined to have a constant predetermined size $\#L(x) = n_L$. Alternatively, the number of direct and/or indirect rays of the respective sets may be different for respective object points. The number of rays within the respective sets depends on the scene complexity and the desired quality of the holographic image.

The BRDF $B(x,p)$ for a respective object point is thus derived based on tracing these two sets of rays. The BRDF $B(x,p)$ is defined by the sum of two light components, i.e. an angle-independent light component $B_d(x)$ representing diffuse lighting and an angle-dependent light component $B_s(x,p)$ representing specular lighting.

The angle-independent light component $B_d(x)$ is a constant term representing the diffuse light emission strength in all directions and is calculated 320 as follows.

For every traced ray $\ell$, whose $\|\ell\|$ is proportional to the light intensity, the diffuse term will be accumulated as follows

$$B_d(x) = \sum_{\ell \in L(x)} max\big(0, K_d(x) \cdot (\ell \cdot n)\big) \quad (5)$$

In other words, all rays whether direct or indirect will be considered in the computation of the angle-independent light component as expressed in Equation (5).

After the computation of the angle-independent component or in parallel with it, the angle-dependent light component $B_s(x)$ is calculated 310. The angle-dependent component is computed based on a subset bundle of light vectors $L'(x) \subseteq L(x)$. Generally $L'(x) \neq L(x)$, because in practice many of the traced rays will have no noticeable effect on $B_s$ because of various reasons: their incidence angle, low light intensity, small specular reflection constant $K_s$ or shininess constant $\alpha$. For this reason, these may be omitted from the bundle to save calculation time. Thus, according to an embodiment, a ray $\ell$ will only be added to the bundle $L'(x)$ if its maximum effect on the holographic image surpasses a certain threshold $T$, which can be chosen depending on the desired quality of the holographic image. This gives rise to the concept of an acceptance cone, as rays outside of that cone will have a contribution smaller than the threshold $T$ for a given light intensity $\|\ell\|$. The threshold thus defines a maximum angle, which in a three-dimensional view is represented by the acceptance cone, at which the contribution of the rays satisfies the above requirement. Given the halfway vector $h = \langle\langle \ell \rangle - u\rangle$, the cosine of the angle $\cos(\theta_{max})$ with the maximum specular light strength $c$ visible from the holographic plane will be

$$c = \begin{cases} 1, & \text{if } (h \cdot n) > \cos(\theta_{max}) \\ (h \cdot n)\cos(\theta_{max}) + \sqrt{1 - (h \cdot n)^2}\sin(\theta_{max}), & \text{otherwise.} \end{cases} \quad (6)$$

Herein, to simplify the notation, the notion of a halfway vector defined by the Blinn-Phong model is used.

Thus, the light vector $\ell$ will only be added to the bundle $L'(x)$ if the following equation is satisfied:

$$K_s(x) \cdot \|\ell\| \cdot c^{\alpha(x)} > T \quad (7)$$

In other words, considering the object point $100_1$, the light rays will only be added if they fall within the acceptance cone 110 with a point of origin the object point, as shown by the light rays illustrated with bold solid lines in FIG.1 to FIG.3. Further, the acceptance cone 110 typically has a normal coinciding with the copy of a viewing cone 210 reflected along the surface normal with the same point of origin. This condition assures that only rays with no noticeable effect on the angle-dependent light component $B_s$ because of various reasons, e.g. their incidence angle, low light intensity, small specular reflection constant $K_s$ or shininess constant $\alpha$, are omitted.

Once all points x with their associated $B_d$ and bundles $L'(x)$ have been calculated, the method proceeds to step 350 to compute the complex-valued amplitudes of the respective pixels in the holographic plane 200. The computation of the complex-valued amplitudes is done based on rays satisfying the following two conditions. Firstly, rays from an object point $x$ will only be traced to a hologram pixel $p$ if the incidence angle does not surpass the maximum diffraction angle $\theta_{max}$. This is represented by a viewing cone with a point of origin the respective holographic pixel and an angle of inclination being the maximum diffraction angle $\theta_{max}$. This viewing cone is referred as to a viewing cone of the holographic pixel. Thus, rays from respective object points $x$ will only be traced to a holographic pixel if these rays fall within the viewing cone of the pixel, i.e. their incidence angle does not exceed the $\theta_{max}$. This assures that the light components of the object points seen from a respective pixel are taken into account in the computation of the complex-valued amplitude of that pixel. This relation may be expressed the other way around; rays from an object point $x$ will only be traced to respective holographic pixels if these rays fall within the viewing cone of the object point, i.e. a viewing cone 210 with a point of origin the respective object point and oriented towards the holographic plane as shown for example in FIG.3. The viewing cone 210 has the same properties as the viewing cone of the pixel except that it has a point of origin an object point rather than a holographic pixel. The viewing cone 210 defines the area of the holographic plane 200 visible from the respective object point, where the size of that visible area is defined by the maximum diffraction angle $\theta_{max}$. The viewing cone 210 is thus defined by the hologram wavelength and the spacing of the pixels in the holographic plane. In other words, only rays from the object point falling within a viewing cone 210 will be considered in the computation of the complex-valued amplitudes of the holographic pixels falling within the visible area of the cone 210. Otherwise, the exponential in Equation (1) will have frequencies surpassing the Nyquist rate $v_{max}$.

And, secondly, for every pixel $p$, a visibility ray is traced to x to see whether it is occluded. If the object point is not occluded, the complex-valued amplitude of the hologram pixel $H(p)$ is incremented by angle-dependent light component

$$B_s(x,p) = B(x,p) - B_d(x) = \sum_{\ell \in L'(x)} K_s(x) \cdot \|\ell\| \cdot (h(p) \cdot n)^{\alpha(x)}. \quad (8)$$

This way only the total light components of the respective non-occluded object points are considered in the computation of the complex-valued amplitude of the respective pixels. The expression in Equation (8) is then used combined with Equation (1) and (3) to compute the complex-valued amplitude of the respective pixel.

The $B_s(x,p)$ and $B_d(x)$ terms are combined to derive the total $B(x,p)$ term which is then used to calculate the PSF for every holographic pixel. Using equations (1) and (3), we get the expression

$$B(x_0,p) \cdot \Phi(x_0) \cdot exp(ik\|p - x_0\|) \, n \cdot \langle p - x_0 \rangle, \quad (9)$$

evaluating the complex-valued amplitude of a single PSF for a single object point $x_0$. This process is repeated and summed over for all object points $x$ to obtain the final computer-generated hologram.

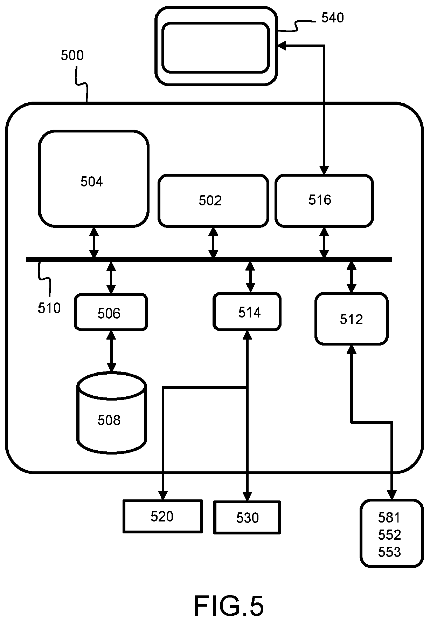

FIG.5 shows a suitable computing system 500 enabling the implementation of embodiments of the method for computing a holographic interference pattern according to the present disclosure. Computing system 500 may, in general, be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory, RAM, or another type of dynamic storage device that stores information and instructions for execution by processor 502 and/or a read only memory, ROM, or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with other computing devices 551, 552, 553. The communication interface 512 of computing system 500 may be connected to such another computing system by means of a local area network, LAN, or a wide area network, WAN, such as for example the internet. Storage element interface 606 may comprise a storage interface such as for example a Serial Advanced Technology Attachment, SATA, interface or a Small Computer System Interface, SCSI, for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, - ROM disk, solid state drives, flash memory cards, ... could be used. Computing system 500 could thus correspond to a data processing system for carrying out the computation of the holographic interference pattern.

As used in this application, the term "circuitry" may refer to one or more or all of the following:

(a) hardware-only circuit implementations such as implementations in only analog and/or digital circuitry and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for computing a holographic interference pattern for a holographic plane (200) comprising pixels ($200_1$ - $200_N$) of an illuminated three-dimensional, 3D, scene (100) comprising object points ($100_1$,...,$100_M$) representing one or more 3D objects, the method comprising:

   - determining (300), for a respective object point ($100_1$,...,$100_M$), a total light component contributed by the one or more light sources (111, 112) in the 3D scene (100);
   - calculating (400), for a respective pixel ($200_1$ - $200_N$), a complex-valued amplitude based on the total light component of non-occluded object points ($100_1$,...,$100_M$) within a viewing cone of the pixel, thereby deriving the holographic interference pattern.

2. The method according to claim 1, wherein the determining (300) comprises calculating (311) an angle-dependent light component based on tracing direct rays from the object point ($100_1$,...,$100_M$) towards one or more light sources (111, 112) in the 3D scene (100).

3. The method according to claim 2, wherein the calculating (312) the angle-dependent light component is further based on tracing indirect rays from the object point ($100_1$,...,$100_M$) towards the one or more light sources (111, 112) in the 3D scene (100).

4. The method according to claims 2 or 3, wherein the tracing is performed within an acceptance cone (110) with a point of origin at the object point.

5. The method according to claim 4, wherein the acceptance cone (110) has a normal coinciding with a normal of a reflected copy of a viewing cone (210) with a point of origin at the object point and oriented towards the holographic plane (200).

6. The method according to claim 5, wherein the calculating (311, 312) the angle-dependent light component is further based on tracing rays from the object point ($100_1,...,100_M$) towards the holographic plane (200) within the viewing cone (210).

7. The method according to any one of claims 4 to 6, wherein the size of the viewing cone (110) is defined based on the size of the viewing cone of the pixel.

8. The method according to any one of the claims 4 to 7, wherein the viewing cone of the pixel is defined by the hologram wavelength and the spacing of the pixels in the holographic plane (200).

9. The method according to any of the preceding claims, wherein the determining further comprises calculating (321) an angle-independent light component based on tracing direct rays from the object point ($100_1,...,100_M$) towards one or more light sources (111, 112) in the 3D scene (100).

10. The method according to claim 9, wherein the calculating (322) the angle-independent light component is further based on tracing indirect rays from the object point ($100_1,...,100_M$) towards one or more light sources (111, 112) in the 3D scene (100).

11. The method according to any of the preceding claims, wherein the one or more light sources (111, 112) comprises at least one area light source and/or at least one volumetric light source (111).

12. The method according to any of the preceding claims, wherein the object points ($100_1,...,100_M$) are distributed over the surfaces of the one or more 3D objects and the number of the object points representing a respective surface is a functrion of the area of the surface, its orientation, its distance to the hologram plane and/or its material properties.

13. A computer program product comprising computer-executable instructions for performing the method according to any of claims 1 to 12 when the program is run on a computer.

14. A computer-readable storage medium comprising a computer program product according to claim 13.

15. A data processing system for carrying out the method according to any one of the claims 1 to 12.

FIG.1

FIG.2

FIG.3

EP 3 929 665 A1

EP 3 929 665 A1

```
┌──────────────────────────────────────────────┐
│     Defining pixels in the holographic plane   │ ┐ 301
└──────────────────────────────────────────────┘
                        │
                        ▼
┌──────────────────────────────────────────────┐
│      Defining object points in the 3D scene    │ ┐ 302
└──────────────────────────────────────────────┘
```

300

┌ ─ ─ ─ ─ ─ ─ ─ ─ ─ ─ ─ ─ ─ ─ ─ ─ ─ ─ ─ ─ ─ ─ ┐

│ ┌──────────────────────────────────────┐ │
│ │ *Calculating, for respective object point, angle* │ ┐ 311 │
│ │ *dependent component based on tracing direct rays* │ │
│ └──────────────────────────────────────┘ │     310
│                    │                          │
│ ┌──────────────────────────────────────┐ │
│ │ *Calculating , for respective object point, angle* │ ┐ 312 │
│ │ *dependent component based on tracing indirect rays* │ │
│ └──────────────────────────────────────┘ │

└ ─ ─ ─ ─ ─ ─ ─ ─ ─ ─ ─ ─ ─ ─ ─ ─ ─ ─ ─ ─ ─ ─ ┘

┌ ─ ─ ─ ─ ─ ─ ─ ─ ─ ─ ─ ─ ─ ─ ─ ─ ─ ─ ─ ─ ─ ─ ┐

│ ┌──────────────────────────────────────┐ │
│ │ *Calculating , for respective object point, angle* │ ┐ 321 │
│ │ *independent component based on tracing direct rays* │ │
│ └──────────────────────────────────────┘ │     320
│                    │                          │
│ ┌──────────────────────────────────────┐ │
│ │ *Calculating, for respective object point, angle* │ ┐ 322 │
│ │ *independent component based on tracing indirect rays* │ │
│ └──────────────────────────────────────┘ │

└ ─ ─ ─ ─ ─ ─ ─ ─ ─ ─ ─ ─ ─ ─ ─ ─ ─ ─ ─ ─ ─ ─ ┘

```
┌──────────────────────────────────────────────────────────┐
│ Calculating, for a respective pixel, complex valued amplitude based on a total light │ ┐ 350
│ component of non-occluded object points within a viewing cone of the pixel │
└──────────────────────────────────────────────────────────┘
```

# FIG.4

FIG.5

EP 3 929 665 A1

Europäisches
Patentamt

European
Patent Office

Office européen
des brevets

# EUROPEAN SEARCH REPORT

Application Number

EP 20 18 1447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ICHIKAWA TSUBASA ET AL: "Full parallax computer generated hologram using GPU-accelerated ray tracing method", PRACTICAL HOLOGRAPHY XXVI: MATERIALS AND APPLICATIONS, SPIE, 1000 20TH ST. BELLINGHAM WA 98225-6705 USA, vol. 8281, no. 1, 9 February 2012 (2012-02-09), pages 1-8, XP060001781, DOI: 10.1117/12.906291 [retrieved on 1901-01-01] * the whole document * | 1-10, 12-15 | INV. G03H1/08 |
| X | UNDERKOFFLER JOHN: "Occlusion processing and smooth surface shading for fully computed syntheticholography", PROCEEDINGS OF SPIE, IEEE, US, vol. 3011, 10 February 1997 (1997-02-10), pages 19-30, XP007903740, DOI: 10.1117/12.271359 ISBN: 978-1-62841-730-2 * the whole document * | 1-3,9-15 | |
| A | JANDA M ET AL: "Hologram synthesis for photorealistic reconstruction", JOURNAL OF THE OPTICAL SOCIETY OF AMERICA A,, vol. 25, no. 12, 1 December 2008 (2008-12-01), pages 3083-3096, XP009142599, ISSN: 1084-7529, DOI: 10.1364/JOSAA.25.003083 [retrieved on 2008-11-24] * paragraph [0003]; figure 4 * | 4-8 | TECHNICAL FIELDS SEARCHED (IPC) G03H |

-/--

The present search report has been drawn up for all claims

| Place of search | Date of completion of the search | Examiner |
|---|---|---|
| Munich | 2 October 2020 | Noirard, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 20 18 1447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SEUNG-CHEOL KIM AND EUN-SOO KIM INVITED PAPER: "Computational approaches for fast generation of digital 3D video holograms", CHINESE OPTICS LETTERS, vol. 7, no. 12, 1 January 2009 (2009-01-01), pages 1083-1091, XP55053267, ISSN: 1671-7694, DOI: 10.3788/COL20090712.1083 * paragraph [0002]; figure 1 * ----- | 1 | |

TECHNICAL FIELDS
SEARCHED      (IPC)

The present search report has been drawn up for all claims

| Place of search | Date of completion of the search | Examiner |
|---|---|---|
| Munich | 2 October 2020 | Noirard, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)